Europäisches Patentamt

**European Patent Office**

Office européen des brevets

(11) Numéro de publication: **0 307 257**
**B1**

(12) **FASCICULE DE BREVET EUROPEEN**

(45) Date de publication du fascicule du brevet:
05.12.90

(51) Int. Cl.⁵: **B60J 1/17**, B60R 13/06

(21) Numéro de dépôt: 88401953.0

(22) Date de dépôt: 28.07.88

(54) **Dispositif de guidage pour vitre coulissante.**

(30) Priorité: 08.09.87 FR 8712657

(43) Date de publication de la demande:
15.03.89 Bulletin 89/11

(45) Mention de la délivrance du brevet:
05.12.90 Bulletin 90/49

(84) Etats contractants désignés:
DE GB IT

(56) Documents cités:
FR-A- 2 535 776
FR-A- 2 551 129
FR-A- 2 555 698

Le dossier contient des informations techniques
présentées postérieurement au dépôt de la demande et
ne figurant pas dans le présent fascicule.

(73) Titulaire: **AUTOMOBILES PEUGEOT, 75, avenue de la
Grande Armée, F-75116 Paris(FR)**
Titulaire: **AUTOMOBILES CITROEN, 62 Boulevard
Victor-Hugo, F-92200 Neuilly-sur-Seine(FR)**

(72) Inventeur: **Rouillard, Firmin, 18, Rue de la Croix Taron,
F-91360 Epinay-sur-Orges(FR)**

(74) Mandataire: **Fabien, Henri et al, PEUGEOT SA. Propriété
Industrielle 18, rue des Fauvelles, F-92250 La
Garenne-Colombes(FR)**

## Description

La présente invention concerne un dispositif de guidage pour vitre coulissante de véhicule permettant d'obtenir une vitre "semi-affleurante" (la vitre étant très peu en retrait du panneau extérieur, cinq millimètres par exemple) de façon à eméliorer les caractéristiques aérodynamiques tout en procurant un bon guidage dans l'encadrement et en ne faisant appel pour cela qu'à des moyens simples et peu coûteux. On sait notamment qu'une vitre mal guidée conduit à des coincements qui peuvent empêcher la fermeture complète de la vitre à grande vitesse.

Le dispositif selon l'invention comporte un guide ou rail qui a une forme générale en U et dans lequel peut coulisser un patin fixé à cheval sur la vitre (Dispositif du genre, par exemple, de FR-A 2 535 776 ou FR-A 2 555 698) selon la figure 5, et est caractérisé en ce que ce patin comporte une lame mince qui est disposée entre la surface extérieure de la vitre et la branche extérieure du guide, une partie amincie reliant la lame mince au corps du patin, en ce que le guide ou rail est soudé entre un panneau extérieur et un panneau intéireur d'un encadrement de porte et en ce qu'un joint fixé sur l'encadrement de la porte assure l'étanchéité.

Des modes particuliers de réalisation de l'invention sont inqiqués dans les revendications dépendantes. On a décrit ci-après, à titre d'exemples non limitatifs, deux modes de réalisation du dispositif selon l'invention, avec référence aux dessins annexés dans lesquels :

La Figure 1 est une vue en coupe horizontale d'un premier mode de réalisation;
La Figure 2 est une vue en coupe horizontale d'un autre mode de réalisation de patin;
La Figure 3 est une vue en coupe verticale suivant III-III de la Figure 2;
La Figure 4 est une vue en élévation latérale du patin.

Au dessin, on voit un guide ou rail métallique de guidage 1 dans lequel peut coulisser un patin 2 fixé à cheval sur une vitre 3 de véhicule automobile.

Ce guide 1 a la forme générale d'un U et est soudé entre un panneau extérieur 4 et un panneau intérieur ou doublure 5, ce qui renforce la structure d'encadrement de la vitre. L'encadrement du panneau 4 est recouvert d'un enjoliveur 6. La branche latérale intérieure du guide 1 comporte un repli perpendiculaire 7 qui constitue une quatrième surface de guidage pour le patin 2. Les bords jointifs du guide 1 et du panneau intérieur 5 sont chaussés par un joint 8.

Le patin 2 en matériau de synthèse, par exemple en polyamide, présente une lame mince 2a qui est reliée au corps 2b par une partie amincie 2c formant charnière. La face interne de cette lame mince porte dans sa partie médiane un téton ou picot 2d qui traverse une ouverture 9 de la vitre 3 et dont la forme lui permet de s'encliqueter dans le corps 2b, ce qui assure la fixation du patin sur la vitre.

L'intérieur du guide 1 est garni d'un profilé 10, par exemple en polypropylène qui protège la peinture et améliore le coulissement du patin 2. L'étanchéité est complétée par une lèvre 11 sertie entre le panneau extérieur 4 et l'enjoliveur 6.

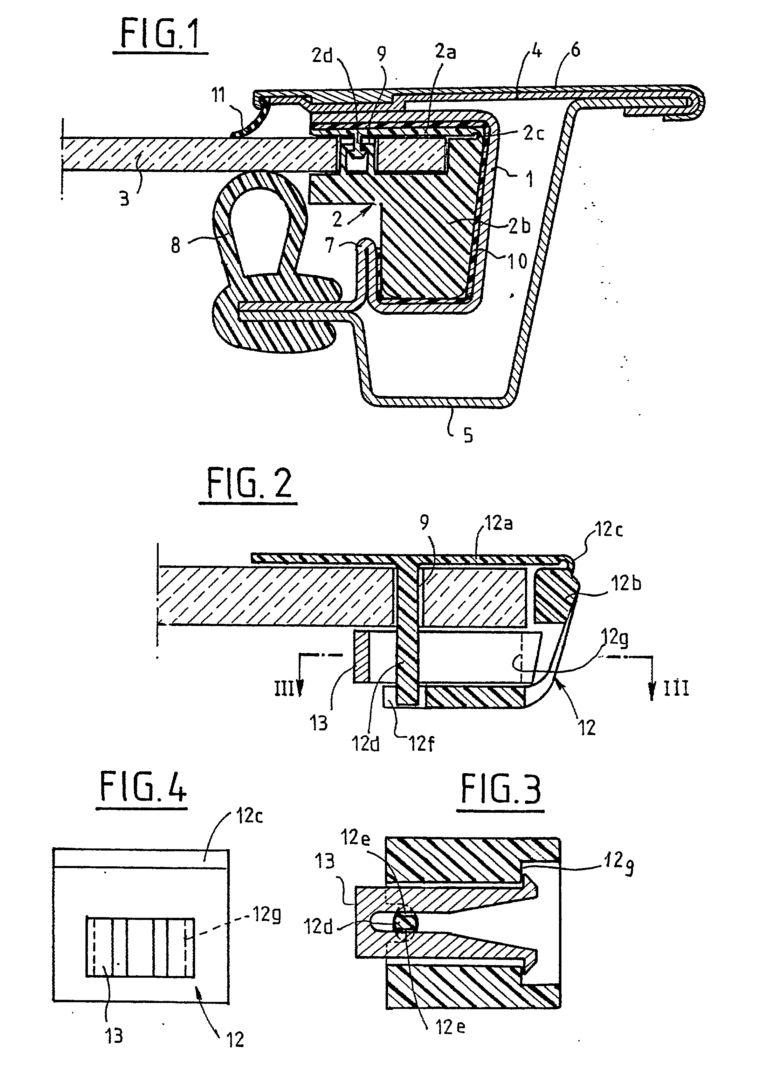

Dans le mode de réalisation des Figures 2 à 4, il est prévu un patin 12 qui, comme le mode de réalisation précédent, présente une lame mince 12a qui est reliée au corps 12b du patin par une partie amincie 12c formant charnière. La face interne de cette lame mince porte un téton 12d qui, dans la partie médiane, présente deux méplats opposés 12e. Lorsqu'un téton 12d a été enfilé dans l'ouverture 9 de la vitre 3, son extrémité est engagée dans une encoche 12f du corps 12b; le téton est alors immobilisé en position par une agrafe 13 qui est engagée sur les méplats 12e du téton 12d et dont les extrémités en forme de crochets viennent aggriper les bords 12g d'une ouverture du patin.

## Revendications

1. Dispositif de guidage pour vitre coulissante de véhicule comprenant un guide ou rail de guidage (1), de forme générale en U, qui est solidaire de l'encadrement de vitre et dans lequel est monté coulissant un patin (2 ou 12) fixé à cheval sur la vitre, caractérisé en ce que le patin comporte une lame mince (2a ou 12a) qui est disposée entre la surface extérieure de la vitre et la branche extérieure du guide (1) une partie amincie (2c ou 12c) reliant la lame mince (2a ou 12a) au corps du patin, en ce que le guide (1) ou rail est soudé entre un panneau extérieur (4) et un panneau intérieur (5) de l'encadrement de porte, et en ce qu'un joint (8) fixé sur l'encadrement de la porte assure l'étanchéité.

2. Dispositif de guidage selon la revendication 1, caractérisé en ce qu'une lèvre d'étanchéité (11) est sertie entre le panneau extérieur (4) et un enjoliveur (6).

3. Dispositif de guidage selon l'une des revendications 1 et 2, caractérisé en ce que le guide ou rail (1) comporte une protubérance (7) constituant une quatrième surface de guidage du patin.

4. Dispositif de guidage selon la revendication 3, caractérisé en ce que la protubérance (7) est constituée par un repli s'étendant perpendiculairement aux branches parallèles du guide ou rail.

5. Dispositif de guidage selon l'une des revendications 1 à 4, caractérisé en ce que la lame mince (2a ou 12a) est solidaire d'un téton ou d'un pilot (2d ou 12d) qui traverse une ouverture (9) de la vitre et qui est fixé au corps (2b ou 12b) par exemple par encliquetage ou agrafage.

6. Dispositif de guidage selon l'une des revendications précédentes, caractérisé en ce que le guide ou rail (1) est garni d'un profilé (10) en matière plastique.

## Patentansprüche

1. Führungsvorrichtung für verschiebbare Fahrzeugfenster mit einer im allgemeinen u-förmigen Führung oder Führungsschiene (1), die fest mit der Umrahmung des Fensters verbunden ist und in der ein beiderseits des Fensters festgelegter Gleitschuh (2 oder 12) verschiebbar angeordnet ist, dadurch gekennzeichnet, daß der Gleitschuh eine zwischen der Außenfläche des Fensters und dem äußeren Schenkel der Führung (1) angeordnete dünne Lamelle (2a oder 12a) und einen verjüngten Abschnitt (2c oder 12c) aufweist, der die dünne Lamelle (2a oder 12a) mit dem Hauptstück des Gleitschuhs verbindet, daß die Führung (1) oder Führungsschiene zwischen einer Außenplatte (4) und einer Innenplatte (5) des Türrahmens eingeschweißt ist und daß eine an dem Türrahmen befestigte Dichtung (8) die Dichtigkeit sicherstellt.

2. Führungsvorrichtung nach Anspruch 1, dadurch gekennzeichnet, daß eine Dichtlippe (11) zwischen der Außenplatte (4) und einer Zierleiste (6) eingesetzt ist.

3. Führungsvorrichtung nach einem der vorhergehenden Ansprüche, dadurch gekennzeichnet, daß die Führung oder Führungsschiene (1) einen Vorsprung (7) aufweist, der eine vierte Gleitschuh-Führungsfläche bildet.

4. Führungsvorrichtung nach Anspruch 4, dadurch gekennzeichnet, daß der Vorsprung (7) aus einem Falz besteht, der sich senkrecht zu den parallelen Schenkeln der Führung oder Führungsschiene erstreckt.

5. Führungsvorrichtung nach einem der Ansprüche 1-4, dadurch gekennzeichnet, daß die dünne Lamelle (2a oder 12a) fest mit einem Ansatz oder Zahn (2d oder 12d) verbunden ist, der eine Öffnung (9) des Fensters durchsetzt und an dem Hauptteil (2b oder 12b) beispielsweise durch Einrasten oder Klemmung befestigt ist.

6. Führungsvorrichtung nach einem der vorhergehenden Ansprüche, dadurch gekennzeichnet, daß die Führung oder Führungsschiene (1) mit einem Profil (10) aus Kunststoff versehen ist.

## Claims

1. Guide device for a vehicle sliding window comprising a guide or guide-rail (1), generally in the form of a channel, which is fixed to the window frame, and in which a runner ( 2 or 12) straddling the window pane has a sliding fit, characterized in that the runner has a leaf (2a or 12a) arranged between the outer surface of the window pane and the outer leg of the guide (1), with a thinned part (2c or 12c) connecting the leaf (2a or 12a) to the body of the runner, the guide (1) or rail is welded between an outer panel (4) and an inner panel (5) of the door frame, and sealing is provided by a seal (8) fixed to the frame of the door.

2. Guide device according to the claim 1, characterized in that a sealing lip (11) is pinched between the outer panel (4) and a trim (6).

3. Guide device according to one of Claims 2, characterized in that the guide or rail (1) has a protuberance (7) constituting a fourth guide surface for the runner.

4. Guide device according to Claim 3, characterized in that the protuberance (7) consists of a fold extending perpendicularly to the parallel legs of the guide or rail.

5. Guide device according to one of Claims 1 to 4, characterized in that the leaf (2a or 12a) is integral with a stud or barb (2d or 12d) passing through an opening (9) in the window pane and fixed to the body (2b or 12b) for example by latching or clamping.

6. Guide device according to one of the foregoing claims, characterized in that the guide or rail (1) is lined with a moulding (10) of plastic material.

EP 0 307 257 B1

## FIG.1

## FIG.2

## FIG.4

## FIG.3